# EUROPEAN PATENT APPLICATION

(11) **EP 4 137 471 A1**
(43) Date of publication of application: **22.02.2023**
(21) Application number: 21812325.5
(22) Date of filing: 27.05.2021
(51) Int. Cl.: C04B 28/14, B28B 1/30, C04B 14/32, C04B 14/36, C04B 22/06, C04B 22/08, C04B 24/18, C04B 24/22, C04B 24/26, C04B 24/30, G21F 1/06, G21F 3/00

(54) **NEUTRON BEAM SHIELDING GYPSUM-BASED CONSTRUCTION BOARD, AND METHOD FOR PRODUCING NEUTRON BEAM SHIELDING GYPSUM-BASED CONSTRUCTION BOARD**

(30) Priority: 29.05.2020 JP 2020094834
(71) Applicant: Yoshino Gypsum Co., Ltd., Tokyo 100-0005 (JP)
(72) Inventor: SATO, Yosuke, Tokyo 100-0005 (JP); NAITO, Daisuke, Tokyo 100-0005 (JP); OKAMOTO, Natsuki, Tokyo 100-0005 (JP); SUZUKI, Masaki, Inzai-shi, Chiba 270-1395 (JP); IKEO, Yosaku, Inzai-shi, Chiba 270-1395 (JP); KUSHIBE, Atsumichi, Inzai-shi, Chiba 270-1395 (JP); OKAMOTO, Hajime, Inzai-shi, Chiba 270-1395 (JP); NORIMONO, Takemi, Tokyo 136-0075 (JP); ODAGAWA, Masanobu, Tokyo 136-0075 (JP)
(74) Representative: Ter Meer Steinmeister & Partner
(86) International application number: PCT/JP2021/020274
(87) International publication number: WO 2021/241707

(57) **Abstract**

A neutron beam shielding gypsum-based building board includes gypsum, a boron-containing material containing boron an amount of which is in a range from 1.0 parts by mass to 120 parts by mass with respect to 100 parts by mass of the gypsum, and a water reducing agent in a range from 0.05 parts by mass to 2.0 parts by mass with respect to 100 parts by mass of the gypsum. The boron-containing material includes one or more kinds selected from calcium borate, boron carbide, boric acid, boron oxide, sodium borate, and calcium boride, and a specific gravity in a dry condition is in a range from 0.65 to 1.6.

## Description

### FIELD OF THE INVENTION

The present invention relates to a neutron beam shielding gypsum-based building board, and a method of manufacturing neutron beam shielding gypsum-based building board.

### BACKGROUND OF THE INVENTION

In recent years, radiation therapy has been used in medical practice.

In radiation therapy facilities, in order to prevent radiation from leaking out of the radiation-using area, the radiation-using area is partitioned by wall materials such as thick concrete walls and walls that combine thick concrete with metal plates such as iron and lead. Therefore, when replacing equipment for radiation therapy, it was necessary to dismantle the wall materials, such as concrete walls, and then build a wall again after replacing the equipment. If the broken wall materials were contaminated with radiation, it would take time and money to dispose of the wall materials.

Therefore, various studies have been conducted on radiation shielding materials that shield radiation.

For example, Patent Document 1 discloses a radiation shielding wall constructed by laminating dry gypsum blocks molded from a radiation shielding composition including water and gypsum.

### RELATED-ART DOCUMENT

### Patent Documents

Patent document 1: Japanese Patent Application Laid-Open 2014-89127

### SUMMARY OF THE INVENTION

### Problems to be Solved by the Invention

However, the radiation shielding wall disclosed in Patent Document 1 needs to be formed by laminating dry gypsum blocks, and further improvement of handling of radiation shielding walls has been required.

In view of the problems of the above conventional technology, one aspect of the present invention is to provide a neutron beam shielding gypsum-based building board with excellent handling properties.

### Means for Solving the Problems

In order to solve the above problem, according to an aspect of the present invention, a neutron beam shielding gypsum-based building board includes gypsum; a boron-containing material containing boron an amount of which is in a range from 1.0 parts by mass to 120 parts by mass with respect to 100 parts by mass of the gypsum; and a water reducing agent in a range from 0.05 parts by mass to 2.0 parts by mass with respect to 100 parts by mass of the gypsum, wherein the boron-containing material is one or more kinds selected from calcium borate, boron carbide, boric acid, boron oxide, sodium borate, and calcium boride, and wherein a specific gravity in a dry condition is in a range from 0.65 to 1.6.

### Effects of the Invention

According to one aspect of the present invention, a neutron beam shielding gypsum-based building board with excellent handling properties can be provided.

### BRIEF DESCRIPTION OF THE DRAWINGS

FIG. 1 is an explanatory view of a neutron beam shielding gypsum-based building board according to an embodiment of the present invention; and
FIG. 2 is an explanatory view of a method of manufacturing a neutron beam shielding gypsum-based building board according to an embodiment of the present invention.

### DETAILED DESCRIPTION

The invention is not limited to the following embodiments, but various variations and substitutions can be made to the following embodiments without departing from the scope of the invention.

### [Neutron Beam Shielding Gypsum-based Building Board]

A configuration example of a neutron beam shielding gypsum-based building board according to the present embodiment will be described.

The neutron beam shielding gypsum-based building board of the present embodiment (hereinafter referred to as "building board") can include gypsum, a boron-containing material, and a water reducing agent.

The building board of the present embodiment contains boron in the boron-containing material in a ratio of from 1.0 parts by mass to 120 parts by mass to 100 parts by mass of gypsum.

In addition, the building board may contain a water reducing agent a range from 0.05 to 2.0 parts by mass with respect to 100 parts by mass of gypsum.

The boron-containing material preferably contains one or more kinds selected from calcium borate, boron carbide, boric acid, boron oxide, sodium borate, and calcium boride.

The specific gravity in dry condition of the building board is preferably in a range from 0.65 to 1.6.

The building board of the present embodiment can have a board shape or plate shape. According to the building board of the present embodiment, since the board shape is as described above, the building board can function as a radiation shielding wall only by fixing. Accordingly, the building board according to the present embodiment has a block shape and the like, and is superior in handling property compared to a radiation shielding material that needs to be laminated to form a radiation shielding wall.

### (1) Components

Hereinafter, the components of the building board of the present embodiment will be first described.

### (1-1) Gypsum

The building board of the present embodiment can include gypsum as described above.

Neutron beams, which are particularly difficult to shield, are effectively shielded by energy absorption due to elastic scattering.

Neutron beams can be classified as fast neutrons, slow neutrons, thermal neutrons, and the like depending on the magnitude of the energy the neutrons possess. Among the neutron beams of the above, energy of the fast neutrons decreases due to collisions with hydrogen having a large absorption cross-sectional area in the energy region. Therefore, from the viewpoint of shielding fast neutron beams, a high hydrogen density material is preferably used for building boards. Since gypsum contains hydrogen in hydrated water and has a high hydrogen density, the building board of the present embodiment contains gypsum, thereby improving the neutron beam shielding property of the building board.

Gypsum also has excellent formability and curing rates. For this reason, the building board of the present embodiment contains gypsum, so that the building board of the present embodiment, which is a radiation shielding material, can be manufactured with high productivity.

### (1-2) Boron-Containing Material

The building board of the present embodiment may further contain boron for the purpose of improving radiation shielding performance against various types of radiation. Neutron beams, particularly those having thermal neutron beam energy, are absorbed by the boron nucleus. Therefore, containing boron in the building board of the present embodiment improves the neutron beam shielding property of the building board.

As described above, the building board of the present embodiment can shield neutron beams, particularly fast neutron beams and thermal neutron beams, by including gypsum and boron.

The building board of the present embodiment can contain boron, for example, as a boron-containing material. The boron-containing material is not particularly limited if the building board contains boron, but preferably includes one or more kinds selected from calcium borate, boron carbide, boric acid, boron oxide, sodium borate, and calcium boride.

In the building board of the present embodiment, the boron-containing material can contain one or more of the compounds selected from the suitable boron-containing material, such as calcium borate and the like. Therefore, as a boron-containing material, one or more compounds selected from the compounds described above further including, for example, hydrated water or the like may be used. The boron-containing material may also be a mineral or the like containing one or more compounds selected from the suitable boron-containing material. Specifically, for example, if the boron-containing material contains calcium borate, colemanite may be used as the boron-containing material. If the boron-containing material contains sodium borate, borax or the like may be used as the boron-containing material. The boron-containing material may be constituted from only one or more of the compounds selected from the suitable boron-containing material, such as calcium borate and the like.

Among others, the boron-containing material more preferably contains one or more kinds selected from calcium borate and boron carbide, and further preferably contains one or more kinds selected from colemanite and boron carbide.

Colemanite is a stable material. Therefore, colemanite is easy to handle, and also cheap. Therefore, it can be preferably used. In addition, since boron carbide is a particularly stable material and is easy to handle, it can be preferably used.

The building board of the present embodiment contains boron in the boron-containing material in a range from 1.0 parts by mass to 120 parts by mass and more preferably from 3.0 parts by mass to 120 parts by mass with respect to 100 parts by mass of gypsum.

"To 100 parts by mass of gypsum" means the ratio of boron in the boron-containing material to 100 parts by mass of dihydrate gypsum (CaSO₄·2H₂O). In building boards, gypsum is usually dihydrate gypsum. A building board may contain gypsum other than dihydrate gypsum, for example, hemihydrate gypsum and the like may be contained. However, the gypsum components contained in the building board are all regarded as forming dihydrate gypsum, and the amount (percentage) of boron contained in the boron-containing material with respect to 100 parts by mass of gypsum is determined. The same applies to the water reducing agent described below.

When the ratio of the mass of boron contained in the boron-containing material is 1.0 parts by mass or more to 100 parts by mass of gypsum, the neutron beam shielding property of the building board can be sufficiently improved.

In addition, when the ratio of the mass of boron contained in the boron-containing material is 120 parts by mass or less to 100 parts by mass of gypsum, a gypsum slurry can be easily prepared when manufacturing the building board and the strength of the obtained building board can be sufficiently increased.

### (1-3) Water Reducing Agent

The building boards of the present embodiment can be manufactured by a pouring molding step. Accordingly, it is possible to manufacture radiation shielding materials with higher productivity than the extrusion step or papermaking step that has been used in the past to manufacture radiation shielding materials.

When the building board is manufactured by the pouring molding step, a water reducing agent is preferably added to increase the dispersibility of gypsum or the like in the gypsum slurry and improve the fluidity of the gypsum slurry to be cast.

The water reducing agent is not particularly limited. For example, a water reducing agent that is conventionally used in manufacturing a cured gypsum can be used. As the water reducing agent, for example, one or more kinds selected from a naphthalene-based water reducing agent, a polycarboxylic acid-based water reducing agent, a lignin-based water reducing agent, a melamine-based water reducing agent, an aminosulfonic acid-based water reducing agent, a phosphate-based water reducing agent, and a bisphenol-based water reducing agent can be used.

The water reducing agent is preferably selected depending on the boron-containing material used. For example, when using colemanite as the boron-containing material, the water reducing agent is preferably one or more kinds selected from a naphthalene-based water reducing agent and a melamine-based water reducing agent.

When boron carbide is used as the boron-containing material, the water reducing agent is preferably one or more kinds selected from a naphthalene-based water reducing agent, a polycarboxylic acid-based water reducing agent, a lignin-based water reducing agent, and a melamine-based water reducing agent.

When colemanite or boron carbide is used as the boron-containing material, the use amount of the water reducing agent described above can be reduced, and the viscosity of the gypsum slurry can be easily adjusted to a desired viscosity.

In the building board of the present embodiment, the water reducing agent is preferably contained in a range from 0.05 parts by mass to 2.0 parts by mass with respect to 100 parts by mass of the gypsum.

Herein again, the term "with respect to 100 parts by mass of the gypsum" means the ratio of the water reducing agent to 100 parts by mass of dihydrate gypsum.

When the content of the water reducing agent is set to 0.05 parts by mass or more, the dispersibility of gypsum or the like in the gypsum slurry for manufacturing the building board can be increased, and the gypsum slurry can have a predetermined viscosity. Accordingly, the building board can be manufactured with high productivity.

In addition, the viscosity of the gypsum slurry does not change significantly even if the content of the water reducing agent is more than 2.0 parts by mass. Therefore, the content of the water reducing agent is adjusted to 2.0 parts by mass or less, the productivity of the building board can be improved, and the cost of the building board can be reduced.

### (1-4) Other Components

The building board can contain any component other than the gypsum, boron-containing materials, and water reducing agent described above.

For example, foam can be added in forming gypsum slurry. Thus, the building board of the present embodiment can also include bubbles of the foam. By adjusting the bubble content, the specific gravity in a dry condition of the building board can be within the desired range.

Alternatively, the building board may contain various additives.

Examples of the additives include strength enhancing agents such as starch, polyvinyl alcohol, and the like; inorganic fibers and light weight aggregates such as glass fibers and the like; refractory materials such as vermiculite and the like; coagulation adjusting agents; foam size adjusting agents such as sulfosuccinate-type surfactants and the like; and water repellents such as silicone, paraffin, and the like.

### (2) Shape and Physical Properties of Building Board

### (2-1) Shape and Configuration

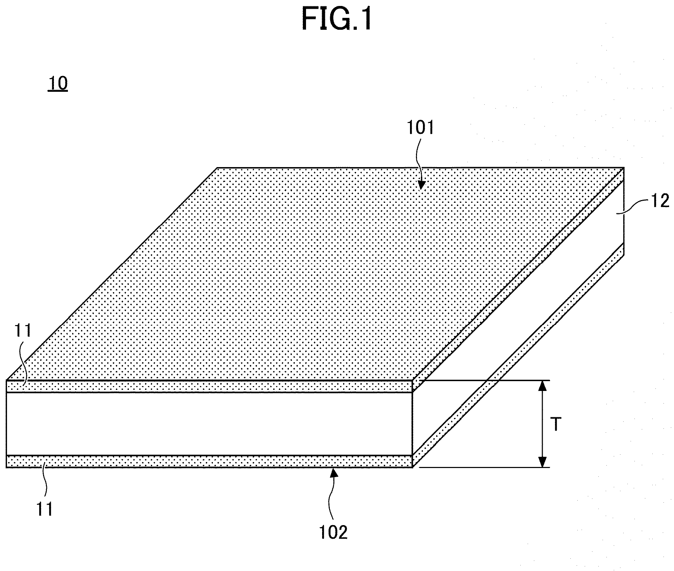

The building board of the present embodiment may have a board shape as in the perspective view illustrated schematically in FIG. 1, and the detailed configuration thereof is not particularly limited. Since the building board of the present embodiment is preferably manufactured by the pouring molding method as described above, a surface material such as a base sheet for the board or a non-woven glass fiber, can be disposed on the surface side.

Therefore, as illustrated in FIG. 1, the building board 10 of the present embodiment is preferably configured by disposing a surface material 11 on a first surface 101 side and on a second surface 102 side that is disposed opposite the first surface 101. The surface material 11 is not particularly limited and may be selected depending on the type of building board to be manufactured. The building board 10 of the present embodiment may be a type selected from, for example, a gypsum board, a glass matted gypsum board, and a non-woven glass fiber gypsum board. Accordingly, examples of the surface material 11 include one kind selected from a base sheet for a board, a glass fiber non-woven fabric, and a glass mat. In FIG. 1, the surface material 11 illustrates an example in which the surface material 11 is disposed on the top surface of a gypsum core 12, but is not limited to such a configuration. The surface material 11 may be disposed partially or entirely embedded within the gypsum core 12. The gypsum core 12 includes the gypsum, the boron-containing material, and the water reducing agent as previously described.

A thickness T of the building board of the present embodiment is not particularly limited, but preferably in a range from 9.5 mm to 25.0 mm and more preferably in a range from 12.5 mm to 25.0 mm. When the thickness T of the building board is 9.5 mm or more, the content of gypsum and the boron-containing material is sufficiently increased and exerting the neutron beam shielding property. In addition, when the thickness T of the building board is 25.0 mm or less, the handling property can be particularly improved.

### (2-2) Specific Gravity in Dry Condition

The specific gravity in a dry condition of the building board of the present embodiment is preferably in a range from 0.65 to 1.6 and more preferably in a range from 0.65 to 1.3.

When the specific gravity in a dry condition is set to be 0.65 or more, the ratio of gypsum to be contained can be sufficiently increased, thereby improving the neutron beam shielding property. When the specific gravity in a dry condition is set to be 1.6 or less, the building board can be a lightweight building board, thereby and particularly improving handling property. In addition, when the specific gravity in a dry condition is set to be 1.6 or less, it is possible to prevent the viscosity of the gypsum slurry used in manufacturing the building board from being excessively high, thereby increasing the productivity.

The specific gravity in a dry condition can be measured and calculated based on the specific gravity measurement method specified in JIS A 6901 (2014).

### (2-3) Exothermic Property

The building board of the present embodiment preferably has a second grade exothermic property or higher in an exothermic property test. That is, a first grade or a second grade exothermic properties are preferable. The exothermic property test described here is defined in Appendix A of JIS A 6901 (2014). In a first grade or a second grade exothermic properties, the total calorific value by the end of the heating time is 8 MJ/m² or less, there are no cracks or holes that penetrate to the back surface of the building board during the heating time that are harmful to fire protection, and the maximum heating rate during the heating time does not exceed 200 kW/m² for more than or equal to 10 seconds. The heating time of a first grade exothermic property is 20 minutes, and the heating time of a second grade exothermic property is 10 minutes.

The Building Standard Law limits the building materials that can be used depending on the use and scale of the building. If the building board of the present embodiment is a second grade exothermic property or higher, the building board can be adapted to an interior restriction required by a building in which building boards are used. Therefore, the building board can be used for various applications or various scales of buildings. The additive amount of organic components such as starch or the like can be adjusted to a desirable grade exothermic property in the building board.

### [Method of Manufacturing neutron beam shielding gypsum-based building boards]

A method of manufacturing a neutron beam shielding gypsum-based building board of the present embodiment will be described.

A method of manufacturing a neutron beam shielding gypsum-based building board of the present embodiment (hereinafter, also referred to as "method of manufacturing a building board") may include the following steps.

A kneading step of kneading a raw material containing at least a calcined gypsum, a boron-containing material, a water reducing agent, and water to form a gypsum slurry.

A molding step of molding a gypsum slurry.

A curing step of curing a molded body obtained in the molding step.

The raw material contains boron in the boron-containing material in a range from 1.0 parts by mass to 120 parts by mass with respect to 100 parts by mass of dihydrate gypsum.

The raw material may contain the water reducing agent in a range from 0.05 to 2.0 parts by mass with respect to 100 parts by mass of dihydrate gypsum.

The boron-containing material preferably contains one or more kinds selected from calcium borate, boron carbide, boric acid, boron oxide, sodium borate, and calcium boride.

The specific gravity in dry condition of the building board obtained after the curing step is preferably in a range from 0.65 to 1.6 or less.

### (1) Manufacturing Steps

Each step will be described below.

### (1-1) Kneading Step

In the kneading step, a raw material containing a calcined gypsum, a boron-containing material, a water reducing agent, and water can be kneaded. Each material contained in the raw material will be explained.

### (1-1-1) Raw Material

### (A) Calcined Gypsum

Calcined gypsum, also called calcium sulfate - 1/2 hydrate, is an inorganic composition having hydraulicity. As the calcined gypsum used in the method of manufacturing the building board of the present embodiment, either α or β calcined gypsum, obtained by firing natural gypsum, by-product gypsum, and flue gas desulfurization gypsum, alone or mixed, in air or in water (including in steam), or a mixture of both, can be used. The calcined gypsum used in the method of manufacturing the gypsum plate of the present embodiment may include type III anhydrous gypsum which is formed in a trace amount when the calcined gypsum is obtained.

The α-type calcined gypsum requires pressure calcination of dihydrate gypsum, such as natural gypsum and the like, in water or steam using an autoclave. In addition, the β-type calcined gypsum can be produced by atmospheric firing dihydrate gypsum such as natural gypsum and the like under atmospheric pressure.

### (B) Boron-Containing Material

The boron-containing material may be a material containing boron, but preferably includes one or more kinds selected from calcium borate, boron carbide, boric acid, boron oxide, sodium borate, and calcium boride as described above.

The boron-containing material may contain one or more compounds selected from the above suitable boron-containing materials, such as calcium borate and the like. Therefore, as the boron-containing material, one or more compounds selected from the compounds described above further include, for example, hydrated water or the like may be used. The boron-containing material may also be a mineral or the like containing one or more compounds selected from the suitable boron-containing materials. Specifically, for example, if the boron-containing material contains calcium borate, colemanite may be used as the boron-containing material. If the boron-containing material contains sodium borate, borax or the like may be used as the boron-containing material. The boron-containing material may be constituted from only one or more compounds selected from the suitable boron-containing materials, such as calcium borate and the like.

The boron-containing material preferably contains one or more kinds selected from calcium borate and boron carbide and further preferably contains one or more kinds selected from colemanite and boron carbide.

In the raw material used in the method of manufacturing the building board of the present embodiment, the raw material contains boron in the boron-containing material in a range from 1.0 parts by mass to 120 parts by mass with respect to 100 parts by mass of dihydrate gypsum.

When the ratio of the mass of boron contained in the boron-containing material is 1.0 parts by mass or more with respect to 100 parts by mass of dihydrate gypsum, the neutron beam shielding property of the building board obtained can be sufficiently improved.

In addition, when the ratio of the mass of boron contained in the boron-containing material is 120 parts by mass or less with respect to 100 parts by mass of dihydrate gypsum, the gypsum slurry can be easily prepared when manufacturing the building board and the strength of the obtained building board can be sufficiently increased.

As will be described later in the curing step, a calcined gypsum (hemihydrate gypsum) contained in the raw material is changed from the calcined gypsum to the dihydrate gypsum in the step of manufacturing the building board. Therefore, when the dihydrate gypsum is used as a building board, the boron-containing material, the water reducing agent, or the like are preferably weighted and added when preparing the raw material so that the ratio of boron or the water reducing agent to 100 parts by mass of dihydrate gypsum to be described later is a predetermined value. Therefore, the boron-containing material is preferably added so that the ratio of the mass of boron contained in the boron-containing material to 100 parts by mass of dihydrate gypsum used as the building board satisfies the above-described range.

It should be noted that the raw material contains boron in the boron-containing material at a ratio of 10 parts by mass to 100 parts by mass of dihydrate gypsum, means that, in the raw material, the boron contained in the boron-containing material to 100 parts by mass of the calcined gypsum is to be about 11.9 parts by mass. This can be calculated by 10×172/145 using 10 parts by mass of boron contained in the boron-containing material, molecular weight of 172 in the dihydrate gypsum, and molecular weight of 145 in the calcined gypsum.

Here, the boron-containing material is used as an example, but the same can be said for the water reducing agent.

### (C) Water Reducing Agent

In the molding step described below, the gypsum slurry can be molded by a pouring molding method. Therefore, the raw material preferably includes the water reducing agent in order to increase the dispersibility of gypsum or the like in the gypsum slurry and improve the flowability of the gypsum slurry to be poured.

The water reducing agent is not particularly limited. For example, a water reducing agent that is conventionally used in manufacturing a cured gypsum can be used. As the water reducing agent, for example, one or more kinds selected from a naphthalene-based water reducing agent, a polycarboxylic acid-based water reducing agent, a lignin-based water reducing agent, a melamine-based water reducing agent, an aminosulfonic acid-based water reducing agent, a phosphate-based water reducing agent, and a bisphenol-based water reducing agent can be used.

The water reducing agent is preferably selected depending on the boron-containing material used. For example, when colemanite is used as the boron-containing material, the water reducing agent is preferably one or more kinds selected from a naphthalene-based water reducing agent and a melamine-based water reducing agent.

When boron carbide is used as the boron-containing material, the water reducing agent is preferably one or more kinds selected from a naphthalene-based water reducing agent, a polycarboxylic acid-based water reducing agent, a lignin-based water reducing agent, and a melamine-based water reducing agent.

When colemanite or boron carbide is used as the boron-containing material, the use amount of the water reducing agent described above can be reduced, and the viscosity of the gypsum slurry can be easily adjusted to a desired viscosity.

In the method of manufacturing the building board of the present embodiment, the water reducing agent is preferably contained in a range from 0.05 parts by mass to 2.0 parts by mass with respect to 100 parts by mass of the dihydrate gypsum in the raw material.

When the content of the water reducing agent is set to 0.05 parts by mass or more, the dispersibility of gypsum or the like in the gypsum slurry can be increased, and the gypsum slurry can have a predetermined viscosity. Accordingly, the building board can be manufactured with high productivity.

In addition, the viscosity of the gypsum slurry does not change significantly even if the content of the water reducing agent is more than 2.0 parts by mass. Therefore, the content of the water reducing agent is adjusted to 2.0 parts by mass or less, the productivity of the building board can be improved, and the cost of the building board can be reduced.

### (D) Water

Since the calcined gypsum, boron-containing material, and the like are kneaded to form the gypsum slurry, the raw material may contain water. The additive amount of water in forming the gypsum slurry is not particularly limited, and a desirable amount of water can be added depending on the required flowability and the specific gravity required for the resulting building board.

### (E) Other Components

The building board can contain any component other than the calcined gypsum, boron-containing materials, water reducing agent, and water described above.

For example, foam can be added in forming the gypsum slurry. The specific gravity of the building board obtained by adjusting the amount of foam added can be within the desired range.

The method of adding foam in forming the gypsum slurry is not particularly limited, and the foam may be added by any method. For example, a foaming agent (blowing agent) may be added to water (water for forming foam) in advance, stirred while taking in air to form foam, and the foam formed may be mixed with a calcined gypsum or water (water for a kneaded gypsum slurry) to form a gypsum slurry in which foam is added. Alternatively, foam may be added to the gypsum slurry formed by pre-mixing a calcined gypsum, boron-containing material, water reducing agent, water, or the like to form a gypsum slurry in which foam is added.

The foaming agents used in forming foam are not limited, but include, for example, alkyl soda sulfates, alkyl ether sulfates, alkyl benzene sulfonate soda, polyoxyethylene alkyl sulfates, and the like.

The amount of foam added is not particularly limited and can be selected arbitrarily according to the specific gravity required for the building board to be manufactured.

The raw material may also contain a variety of additives. Examples of the additives include strength enhancing agents such as starch, polyvinyl alcohol, and the like; inorganic fibers and light weight aggregates such as glass fibers and the like; refractory materials such as vermiculite and the like; coagulation adjusting agents; foam size adjusting agents such as sulfosuccinate-type surfactants; and water repellents such as silicone and paraffin; and the like.

### (1-1-2) Operation of Kneading Step

When the raw material is kneaded and the gypsum slurry is prepared, all components of the raw material may be simultaneously kneaded, but the kneading may be performed multiple times. For example, after the solid component of the raw material is mixed and kneaded to form a gypsum composition, the liquid component of the raw material, such as water or the like, is added to the obtained gypsum composition and further kneaded to form a gypsum slurry.

The means for kneading the raw material is not particularly limited. For example, a mixer or the like may be used.

### (1-2) Molding Step

In the molding step, the gypsum slurry obtained in the kneading step can be molded into a desired shape. Specifically, a gypsum slurry may be disposed between, for example, surface materials. As the surface materials, for example, one kind selected from a board base sheet, a non-woven glass fiber, and a glass mat may be used.

In the molding step, the raw material can be formed into a board shape, that is a plate shape.

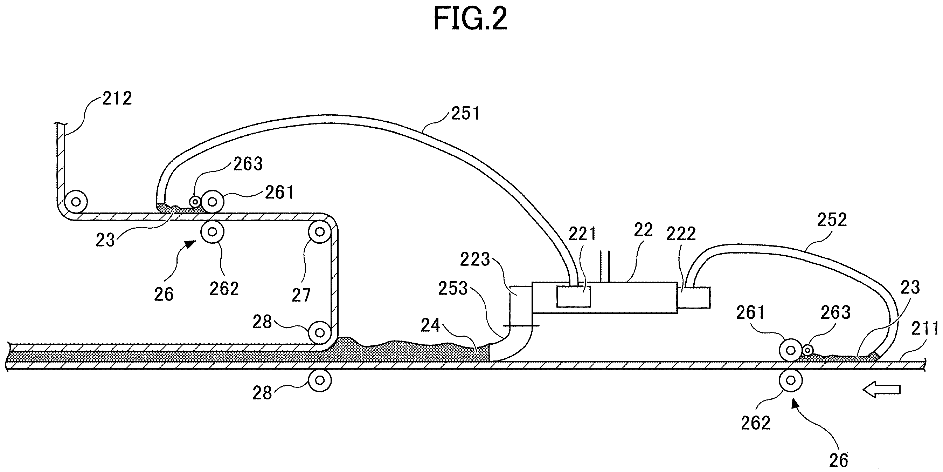

Here, FIG. 2 is used to illustrate an example of the configuration of the kneading and molding steps in the manufacturing of the gypsum board as the building board. FIG. 2 is a partial and schematic side view of an example configuration of equipment for forming the gypsum board.

The surface cover base sheet (base sheet for a board) 211 is continuously conveyed along the production line from right side to left side in FIG. 2.

A mixer 22 may be positioned in a predetermined position associated with a transport line, for example, above or to the side of the transport line. In the single mixer 22, the gypsum slurry can be produced by kneading the gypsum slurry components, such as the calcined gypsum, the boron-containing material, the water reducing agent, water, and possibly various additional additives.

As described above, the solid such as gypsum may be mixed and agitated in advance to form a gypsum composition which is a mixture and supplied to the mixer 22.

Foam can also be added from gypsum slurry dispensing ports 221, 222, and 223 as needed, and the amount of foam added can be adjusted to make the gypsum slurry of any density. For example, by adjusting the amount of foam added, a first gypsum slurry 23 and a second gypsum slurry 24 with different densities can be prepared. The foam can also be supplied to the mixer 22 with the other components of the gypsum slurry, rather than to the dispensing ports.

The resulting first gypsum slurry 23 is fed through delivery tubes 251 and 252 onto a surface cover base sheet (board base sheet) 211 and a back cover base sheet (board base sheet) 212 on the upstream side of a roll coater 26. The above-described upstream side means the upstream side of the surface cover base sheet 211 and the back cover base sheet 212 in the conveying direction. The first gypsum slurry 23 on the surface cover base sheet 211 and the back cover base sheet 212 are each extended to the extension of the roll coater 26. The roll coater 26 includes a coating roll 261, a receiving roll 262, and a residue removal roll 263 through which the first gypsum slurry 23 extends.

A thin layer of the first gypsum slurry 23 is formed on the surface cover base sheet 211. Similarly, a thin layer of the first gypsum slurry 23 is formed on the back cover base sheet 212. FIG. 2 illustrates an example in which the first gypsum slurry 23 is applied to the surface cover base sheet 211 and the back cover base sheet 212 using the roll coater 26, but is not limited to such an embodiment. For example, the first gypsum slurry 23 may be applied to either the surface cover base sheet 211 or the back cover base sheet 212 using the roll coater 26. The first gypsum slurry 23 may be disposed only at the side end of the surface cover base sheet 211.

The surface cover base sheet 211 is conveyed in its original form, and the back cover base sheet 212 is redirected in the conveying line direction of the surface cover base sheet 211 by a reversing roller 27. Both the surface cover base sheet 211 and the back cover base sheet 212 reach a molding machine 28. Here, the second gypsum slurry 24 is supplied from the mixer 22 through a conduit 253 between the thin layers formed on the surface cover base sheet 211 and the back cover base sheet 212. Therefore, it is possible to form a continuous laminate in which a layer formed by the first gypsum slurry 23 between the surface cover base sheet 211 and the back cover base sheet 212, a layer formed by the second gypsum slurry 24, and a layer formed by the first gypsum slurry 23 are laminated.

Although FIG. 2 illustrates an example in which the first gypsum slurry 23 and the second gypsum slurry 24 are manufactured by the single mixer 22, two mixers may be provided to manufacture the first gypsum slurry 23 and the second gypsum slurry 24 in each mixer.

Further, the present invention is not limited to the embodiment in which the first gypsum slurry and the second gypsum slurry are used. For example, a gypsum slurry of one specific density may be manufactured and supplied on the base sheet for boards.

Specifically, for example, a gypsum slurry having a predetermined density is fed and deposited on the surface cover base sheet (board base sheet) which is continuously conveyed. Then, the underlying sheet is folded along the carved lines at the edges thereof so as to enfold the gypsum slurry. At this time, the back cover base sheet (board base sheet) conveyed at the same speed is laminated on the layer of gypsum slurry. The gypsum board is then passed through a molding machine to determine thickness and width. The gypsum board can also be molded according to the above procedure.

Although an example of the case in which the gypsum board is manufactured as the building board has been described, the present embodiment is not limited to such an embodiment. For example, the base sheet for the board, which is the surface material, can be changed to a glass fiber non-woven fabric (glass tissue), a glass mat, or the like, and the base sheet can be disposed so as to be embedded on or near the surface of the gypsum board to manufacture various types of building boards.

### (1-3) Curing Step

A curing step can be performed to hydrate and cure the gypsum slurry.

The curing step can be carried out when the calcined gypsum (hemihydrate gypsum) in the gypsum slurry coagulates and solidifies by forming needle-like crystals of dihydrated gypsum through a hydration reaction. Therefore, the curing step can be carried out by the reaction between the calcined gypsum contained in the gypsum slurry and water within the molded body formed in the molding step, and the hydration reaction of the calcined gypsum proceeds.

### (1-4) Other Steps

The method of manufacturing the building board of the present embodiment may further include, if necessary, a rough cutting step, a drying step, a fine cutting step, a loading step, or any other step.

### (1-4-1) Rough Cutting Step

For example, after the molding step, a rough cutting step may be performed in which the molded body is roughly cut using a rough cutting cutter during the curing step or after the curing step is completed. In the rough cutting step, the rough cutting cutter allows a continuous molded body formed in the forming step to be cut to a predetermined length.

### (1-4-2) Drying Step

In addition, a drying step can be performed in which excess water content is dried in the molded body formed in the molding step or in the molded body roughly cut in the rough cutting step. It should be noted that the drying step can be performed by supplying the molded body with the curing step completed. The drying step can be carried out by forcing drying of the molded body using a dryer.

The method of forcibly drying the molded body by a dryer is not particularly limited, but it is possible to continuously dry the molded body by, for example, providing a dryer on a conveyance path of the molded body and passing the molded body through the dryer. Alternatively, the molded body can be introduced into the dryer and the molded body can be dried for each batch.

### (1-4-3) Fine Cutting and Loading Steps

Further, for example, a fine cutting step of cutting the molded body into a product of a predetermined length after drying, a loading step of laminating the resulting cured gypsum body or gypsum board by a lifter or the like, storing the resulting cured gypsum body or gypsum board in a warehouse, or loading the resulting cured gypsum body or gypsum board into a truck or the like for shipment, or the like can be performed.

### (2) Shape and Physical Properties of the Resulting Building Board

The aforementioned method of manufacturing the building board allows for manufacturing the aforementioned building board. For this reason, the explanation of the matters already explained shall be partially omitted. Specifically, the building board can have the following characteristics.

### (2-1) Shape and Configuration

The resulting building board may have a board shape, and the detailed structure thereof is not particularly limited. However, for manufacturing by the pouring mold method as described above, it is possible to dispose a base sheet for the board or a surface material, such as a non-woven glass fabric, on the surface side.

The surface material may be one kind selected from, for example, a base sheet for board, a glass fiber non-woven fabric, and a glass mat. The surface material may be placed on the top surface of the gypsum core or may be placed so that the surface material is partially or entirely embedded within the gypsum core.

### (2-2) Specific Gravity in a Dry Condition

The specific gravity in a condition of the building board obtained after the curing step is preferably in a range from 0.65 to 1.6 and more preferably in a range from 0.65 to 1.3 or less.

When the specific gravity in a dry condition is set to be 0.65 or more, the ratio of gypsum to be contained can be sufficiently increased thereby improving the neutron beam shielding property. When the specific gravity in a dry condition is set to be 1.6 or less, the building board can be a lightweight building board, thereby particularly improving handling property. In addition, when the specific gravity in a dry condition is set to be 1.6 or less, it is possible to prevent the viscosity of the gypsum slurry prepared in the kneading step from being excessively high, thereby increasing the productivity.

### (2-3) Exothermic Property

The building board obtained after the curing step is preferably a second grade exothermic property or higher in an exothermic property test.

If the resulting building board is a second grade exothermic property or higher, the building board to be used can be adapted to an interior limitation that are demanded to a building in which building boards are used. Therefore, the building board can be used for various applications or various scales of buildings. The additive amount of organic components such as starch or the like can be adjusted to a desirable grade exothermic property in the building board.

### EXAMPLES

Although specific embodiments will be described below, the present invention is not limited to these embodiments.

### (1) Evaluation Method

First, the gypsum slurry obtained in the following Experimental Examples and the method of evaluating the building board will be described.

### (1-1) Gypsum Slurry

### (Viscosity)

A Brookfield viscometer (B-type viscometer) was used, the viscosity of the gypsum slurry was measured at room temperature (25°C).

### (1-2) Building Board

### (Specific Gravity in a Dry Condition)

The specific gravity in a dry condition was measured and calculated based on the specific gravity measurement method specified in JIS A 6901 (2014).

### (Thickness)

The thickness of the building board was measured and calculated based on the thickness measurement method specified in JIS A 6901 (2014).

### (Compression Strength)

The compressive strength of the prepared building board was measured using an autograph (model AG-10NKI, manufactured by Shimadzu Corporation). The prepared building board was cut to a size of 2 cm in length × 2 cm in width on a plane perpendicular to the thickness direction, and used as a test piece. The height of each test piece is equal to the thickness of each building board. For example, in the case of Experiment Example 1-1 below, the height of the test piece is 15 mm, which is the same as the thickness of the prepared building board. The load applied to the test piece was 3 mm/min.

### (Exothermic Property Test)

The exothermic property test was performed in accordance with Appendix A of JIS A 6901 (2014).

### (Neutron Beam Shielding Rate)

The neutron beam shielding property was evaluated using a rectangular analysis model of 20 cm in length, 20 cm in width, and 20 cm in thickness for building boards prepared in each Experimental Example. From the neutron beam shielding property obtained from the analysis results in the above-mentioned analysis model, the neutron beam shielding rate was calculated by considering the thickness of the building board manufactured in the following Experimental Examples.

The neutron beam shielding property was evaluated using the analytical model using PHITS (Particle and Heavy ion transport code system) as the calculation code. For PHITS, version 3.02 was used.

A point source neutron beam (25 meV) was used as the line type in the analysis. Conversion factors were those disclosed in ICRP Publication 74.

### (2) Conditions and Results of Each Experiment

The manufacturing conditions, procedures, and results of the building board in each of the following examples are described.

Experimental Examples 1-1 to 1-11 and Experimental Examples 2-1 to 2-8 are Examples. Experimental Examples 1-12 to 1-18, Experimental Examples 2-9, and Experimental Examples 2-10 are Comparative Examples.

### [Experiment Example 1-1]

A gypsum board was manufactured as a building board using the apparatus illustrated in FIG. 2.

A procedure of manufacturing gypsum board will be described with reference to FIG. 2.

### (Kneading Step)

The surface cover base sheet (base sheet for a board) 211 was continuously conveyed along the production line from right side to left side in FIG. 2.

In a single mixer 22, a β-type gypsum, a boron-containing material, colemanite, a naphthalene-based water reducing agent, and water were mixed to prepare a raw material.

The amount of water to be added and the amount of foam to be added if necessary were adjusted so that the specific gravity in a dry condition of the gypsum board to be obtained was the value indicated in Table 1, when mixing the raw materials in this and other Experimental Examples indicated below. When foam was added, the foam was prepared by foaming a foaming agent (main component: alkyl ether sulfate).

As indicated in Table 1, the raw material contains boron in the colemanite in a ratio of 5.6 parts by mass to 100 parts by mass of dihydrate gypsum. In addition, the raw material also contains a naphthalene-based water reducing agent at a ratio of 1.5 parts by mass to 100 parts by mass of dihydrate gypsum. It was confirmed by ICP emission spectrometry that the resulting gypsum board also contained each component in the same ratio. The same was true in the following other experiments.

### (Molding Step)

The gypsum slurry obtained in the mixer 22 was fed from the dispensing ports 221 and 222 through the delivery tubes 251 and 252 onto the surface cover base sheet 211 and the back cover base sheet (board base sheet) 212 at the upstream side of the roll coater 26.

The first gypsum slurry 23 on the surface cover base sheet 211 and the back cover base sheet 212 are each extended to the extension of the roll coater 26. A thin layer of the first gypsum slurry 23 is formed on the surface cover base sheet 211. Similarly, a thin layer of the first gypsum slurry 23 is formed on the back cover base sheet 212.

The surface cover base sheet 211 is conveyed in its original form, and the back cover base sheet 212 is redirected in the conveying line direction of the surface cover base sheet 211 by the reversing roller 27.

Both the surface cover base sheet 211 and the back cover base sheet 212 reach the molding machine 28. Here, the second gypsum slurry 24 is supplied through the conduit 253 between the thin layers formed on the surface cover base sheet 211 and the back cover base sheet 212.

By passing through the molding machine 28, a continuous laminate is formed in which a layer formed by the first gypsum slurry 23 and the second gypsum slurry 24 is placed between the surface cover base sheet 211 and the back cover base sheet 212. At this time, the thickness of gypsum board is formed to be 15 mm.

### (Curing Step)

The resulting molded body, specifically gypsum slurry, was cured during the conveying step.

### (Rough Cutting Step)

When the molded body was cured, the cured molded body was applied to a rough cutting cutter which is not illustrated. The continuous molded body was cut into plates of a predetermined length by the rough cutting cutter to form a semi-product of a gypsum board, which was a plate formed of a core material mainly composed of gypsum covered with a base sheet.

### (Drying Step)

The roughly cut molded body was passed through a dryer which is not illustrated and forcibly dried to remove excess water content.

### (Cutting Step)

After the drying step, the product was cut into a product having a predetermined length to obtain a gypsum board, which is a building board.

The gypsum board obtained was evaluated as described above. Evaluation results are indicated in Table 1.

### [Experimental Example 1-2, Experimental Example 1-3]

When the gypsum slurry was prepared in the kneading step, the amount of colemanite contained in the raw material was adjusted so that the amount of boron contained was 13.1 parts by mass (Experimental Example 1-2) and 1.4 parts by mass (Experimental Example 1-3) with respect to 100 parts by mass of dihydrate gypsum. The gypsum board was manufactured and evaluated in the same manner as in Experimental Example 1-1 except for the above points. Evaluation results are indicated in Table 1.

### [Experimental Example 1-4]

When the gypsum slurry was prepared in the kneading step, the gypsum board was manufactured and evaluated in the same manner as Experimental Example 1-1, except that the amount of water was adjusted and the specific gravity of the obtained gypsum board was adjusted to 1.3. Evaluation results are indicated in Table 1.

### [Experimental Example 1-5, Experimental Example 1-6]

When the gypsum slurry was prepared in the kneading step, the amount of the water reducing agent contained in the raw material was adjusted to be 0.8 parts by mass (Experimental Example 1-5) and 0.1 parts by mass (Experimental Example 1-6) with respect to 100 parts by mass of dihydrate gypsum. In addition, by adjusting the amount of water to be added, the specific gravity in a dry condition of the obtained gypsum board was adjusted to be 0.9 (Experimental Example 1-5) and 0.65 (Experimental Example 1-6). The gypsum board was manufactured and evaluated in the same manner as Experimental Example 1-1 except the above points. Evaluation results are indicated in Table 1.

### [Experimental Example 1-7]

When the gypsum slurry was prepared in the kneading step, the gypsum board was manufactured and evaluated in the same manner as Experimental Example 1-1, except that a melamine-based water reducing agent was used instead of a naphthalene-based water reducing agent. Evaluation results are indicated in Table 1.

### [Experimental Example 1-8, Experimental Example 1-9]

In the molding step, the gypsum board was manufactured and evaluated in the same manner as in Experimental Example 1-1, except that the thickness of the gypsum board to be manufactured was adjusted to the value indicated in Table 1. The evaluation results are indicated in Table 1.

### [Experimental Example 1-10]

When the gypsum slurry was prepared in the kneading step, the gypsum board was manufactured and evaluated in the same manner as in Experimental Example 1-1, except that the amount of the water reducing agent contained in the raw material was adjusted to 1.0 parts by mass with respect to 100 parts by mass of dihydrate gypsum.

### [Experimental Example 1-11]

When the gypsum slurry was prepared in the kneading step, a melamine-based water reducing agent was used as the water reducing agent, and the amount of the water reducing agent contained in the raw material was adjusted to 1.0 parts by mass with respect to 100 parts by mass of dihydrate gypsum. The gypsum board was manufactured and evaluated in the same manner as Experimental Example 1-1 except for the above points. Evaluation results are indicated in Table 1.

### [Experimental Example 1-12, Experimental Example 1-13]

When the gypsum slurry was prepared in the kneading step, the amount of colemanite contained in the raw material was adjusted so that the amount of boron contained was 0.7 parts by mass (Experimental Example 1-12) and 132.3 parts by mass (Experimental Example 1-13) with respect to 100 parts by mass of dihydrate gypsum. The gypsum board was manufactured and evaluated in the same manner as in Experimental Example 1-1 except for the above points. Evaluation results are indicated in Table 1.

### [Experimental Example 1-14, Experimental Example 1-15]

When the gypsum slurry was prepared in the kneading step, the amount of water reducing agent contained in the raw material was adjusted to be 3.0 parts by mass (Experimental Example 1-14) and 0.02 parts by mass (Experimental Example 1-15) with respect to 100 parts by mass of dihydrate gypsum. The gypsum board was manufactured and evaluated in the same manner as Experimental Example 1-1 except for the above points. Evaluation results are indicated in Table 1.

### [Experimental Example 1-16 to Experimental Example 1-18]

When the gypsum slurry was prepared in the kneading step, a melamine-based water reducing agent (Experimental Example 1-16), a lignin-based water reducing agent (Experimental Example 1-17), and a polycarboxylic acid-based water reducing agent (Experimental Example 1-18) were used as water reducing agents. The gypsum board was manufactured and evaluated in the same manner as Experimental Example 1-14 except for the above points. Evaluation results are indicated in Table 1.

### [Experimental Example 2-1]

When the gypsum slurry was prepared in the kneading step, boron carbide (B₄C) was used as the boron-containing material, and the amount of the water reducing agent contained in the raw material was adjusted to be 0.8 parts by mass with respect to 100 parts by mass of dihydrate gypsum. The gypsum board was manufactured and evaluated in the same manner as in Experimental Example 1-1 except for the above points. Evaluation results are indicated in Table 1.

### [Experimental Example 2-2, Experimental Example 2-3]

When the gypsum slurry was prepared in the kneading step, the amount of boron carbide contained in the raw material was adjusted to be 70.5 parts by mass (Experimental Example 2-2) and 118.0 parts by mass (Experimental Example 2-3) of boron contained with respect to 100 parts by mass of dihydrate gypsum. The gypsum board was manufactured and evaluated in the same manner as in Experimental Example 2-1 except for the above points. Evaluation results are indicated in Table 1.

### [Experimental Example 2-4]

When the gypsum slurry was prepared in the kneading step, the gypsum board was manufactured and evaluated in the same manner as Experimental Example 2-1, except that the amount of water reducing agent contained in the raw material was adjusted to be 2.0 parts by mass with respect to 100 parts by mass of dihydrate gypsum. Evaluation results are indicated in Table 1.

### [Experimental Example 2-5]

When the gypsum slurry was prepared in the kneading step, the gypsum board was manufactured and evaluated in the same manner as Experimental Example 2-1, except that a polycarboxylic acid-based water reducing agent was used instead of a naphthalene-based water reducing agent. Evaluation results are indicated in Table 1.

### [Experimental Example 2-6]

When the gypsum slurry was prepared in the kneading step, the amount of the water reducing agent contained in the raw material was adjusted to be 1.5 parts by mass with respect to 100 parts by mass of dihydrate gypsum. In addition, when the gypsum slurry was prepared in the kneading step, the amount of water to be added and the like are adjusted so that the specific gravity of the obtained gypsum board was adjusted to be 1.5. The gypsum board was manufactured and evaluated in the same manner as Experimental Examples 2-5 except for the above points. Evaluation results are indicated in Table 1.

### [Experimental Example 2-7, Experimental Example 2-8]

When the gypsum slurry was prepared in the kneading step, the gypsum board was manufactured and evaluated in the same manner as Experimental Example 2-1 except that a lignin-based water reducing agent (Experimental Example 2-7) and a melamine-based water reducing agent (Experimental Example 2-8) are used instead of the naphthalene-based water reducing agent. Evaluation results are indicated in Table 1.

### [Experimental Example 2-9]

When the gypsum slurry was prepared in the kneading step, the amount of boron carbide contained in the raw material was adjusted to be 313.2 parts by mass of boron contained with respect to 100 parts by mass of dihydrate gypsum. The gypsum board was manufactured and evaluated in the same manner as in Experimental Example 2-1 except for the above points. Evaluation results are indicated in Table 1.

### [Experimental Example 2-10]

A polycarboxylic acid-based water reducing agent was used instead of the naphthalene-based water reducing agent, and the amount of the water reducing agent contained in the raw material was adjusted to be 1.5 parts by mass with respect to 100 parts by mass of dihydrate gypsum. When the gypsum slurry was prepared in the kneading step, the amount of water to be added and the like are adjusted so that the specific gravity of the obtained gypsum board was adjusted to 1.7. The gypsum board was manufactured and evaluated in the same manner as in Experimental Example 2-1 except for the above points. Evaluation results are indicated in Table 1.

**[Table 1]**

| | Boron-containing material | | Water reducing agent | | Evaluation result of gypsum slurry | Evaluation results of building board | | | | |
|---|---|---|---|---|---|---|---|---|---|---|
| | Material | Amount of boron contained (parts by mass) | Material | Amount of water reducing agent contained (parts by mass) | Viscosity (dPa·s) | Specific gravity in a dry condition | Thickness | Compress ion strength (kgf/cm³) | Exothermic property test | neutron beam shielding rate |
| Experimental Example 1-1 | Colemanite | 5.6 | Naphthalene-based | 1.5 | 40 | 1.1 | 15 mm | 82 | 1 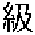 | 96.55% |
| Experimental Example 1-2 | Colemanite | 13.1 | Naphthalene-based | 1.5 | 55 | 1.1 | 15 mm | 61 | 1 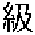 | 99.58% |
| Experimental Example 1-3 | Colemanite | 1.4 | Naphthalene-based | 1.5 | 10 | 1.1 | 15 mm | 105 | 1 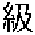 | 65.42% |
| Experimental Example 1-4 | Colemanite | 5.6 | Naphthalene-based | 1.5 | 85 | 1.3 | 15 mm | 103 | 1 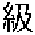 | 98.18% |
| Experimental Example 1-5 | Colemanite | 5.6 | Naphthalene-based | 0.8 | 5 | 0.9 | 15 mm | 57 | 1 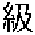 | 93.44% |
| Experimental Example 1-6 | Colemanite | 5.6 | Naphthalene-based | 0.1 | 5 | 0.65 | 15 mm | 31 | 1 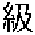 | 85.32% |
| Experimental Example 1-7 | Colemanite | 5.6 | Melamine-based | 1.5 | 5 | 1.1 | 15 mm | 80 | 1 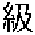 | 96.55% |
| Experimental Example 1-8 | Colemanite | 5.6 | Naphthalene-based | 1.5 | 42 | 1.1 | 9.5 mm | 78 | 1 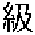 | 87.18% |
| Experimental Example 1-9 | Colemanite | 5.6 | Naphthalene-based | 1.5 | 41 | 1.1 | 25 mm | 81 | 1 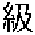 | 99.63% |
| Experimental Example 1-10 | Colemanite | 5.6 | Naphthalene-based | 1.0 | 52 | 1.1 | 15 mm | 77 | 1 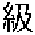 | 96.55% |
| Experimental Example 1-11 | Colemanite | 5.6 | Melamine-based | 1.0 | 11 | 1.1 | 15 mm | 83 | 1 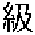 | 96.55% |
| Experimental Example 1-12 | Colemanite | 0.7 | Naphthalene-based | 1.5 | 6 | 1.1 | 15 mm | 111 | 1 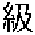 | 26.71% |
| Experimental Example 1-13 | Colemanite | 132.3 | Naphthalene-based | 1.5 | 33 | 1.1 | 15 mm | - | - | - |
| Experimental Example 1-14 | Colemanite | 5.6 | Naphthalene-based | 3.0 | 41 | 1.1 | 15 mm | 80 | 1 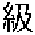 | 96.55% |
| Experimental Example 1-15 | Colemanite | 5.6 | Naphthalene-based | 0.02 | 120 | 1.1 | - | - | - | - |
| Experimental Example 1-16 | Colemanite | 5.6 | Melamine-based | 3.0 | 6 | 1.1 | 15 mm | 83 | 1 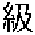 | 96.55% |
| Experimental Example 1-17 | Colemanite | 5.6 | Lignin-based | 3.0 | >150 | 1.1 | - | - | - | - |
| Experimental Example 1-18 | Colemanite | 5.6 | Polycarboxylic acid-based | 3.0 | >150 | 1.1 | - | - | - | - |
| Experimental Example 2-1 | Boron carbide | 5.6 | Naphthalene-based | 0.8 | 25 | 1.1 | 15 mm | 139 | 1 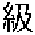 | 98.78% |
| Experimental Example 2-2 | Boron carbide | 70.5 | Naphthalene-based | 0.8 | 21 | 1.1 | 15 mm | 73 | 1 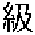 | 100.00% |
| Experimental Example 2-3 | Boron carbide | 118.0 | Naphthalene-based | 0.8 | 18 | 1.1 | 15 mm | 65 | 1 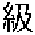 | 100.00% |
| Experimental Example 2-4 | Boron carbide | 5.6 | Naphthalene-based | 2.0 | 5 | 1.1 | 15 mm | 134 | 1 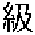 | 98.78% |
| Experimental Example 2-5 | Boron carbide | 5.6 | Polycarboxylic acid-based | 0.8 | 22 | 1.1 | 15 mm | 137 | 1 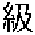 | 98.78% |
| Experimental Example 2-6 | Boron carbide | 5.6 | Polycarboxylic acid-based | 1.5 | 20 | 1.5 | 15 mm | 217 | 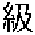 | 99.76% |
| Experimental Example 2-7 | Boron carbide | 5.6 | Lignin-based | 0.8 | 70 | 1.1 | 15 mm | 135 | 1 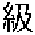 | 98.78% |
| Experimental Example 2-8 | Boron carbide | 5.6 | Melamine-based | 0.8 | 25 | 1.1 | 15 mm | 141 | 1 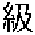 | 98.78% |
| Experimental Example 2-9 | Boron carbide | 313.2 | Naphthalene-based | 0.8 | 16 | 1.1 | 15 mm | 23 | 1 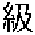 | - |
| Experimental Example 2-10 | Boron carbide | 5.6 | Polycarboxylic acid-based | 1.5 | >150 | 1.7 | - | - | - | - |

According to Table 1, the gypsum boards manufactured in Experimental Examples 1-1 to 1-11 and Experimental Examples 2-1 to 2-8 were all indicated to have a neutron beam shielding rate greater than 60% and to have sufficient neutron beam shielding property.

Each of these gypsum boards has a board shape or plate shape. For this reason, fixing the gypsum board can have a function as a radiation shielding wall, and it can be confirmed that the gypsum board is easy to handle.

However, the gypsum board manufactured in Experimental Example 1-12 was found to have a low neutron beam shielding rate of 26.71% due to the insufficient boron content.

As for the gypsum board manufactured in Experimental Example 1-13, the gypsum board manufactured was fragile because the content of the boron-containing material was too high, and the compression strength test could not be performed.

Although, the amount of water reducing agent was doubled in Experimental Examples 1-14 and 1-16 compared to Experimental Examples 1-1 and 1-7, which used the same reducing agent with Experimental Examples 1-14 and 1-16, the viscosity of the gypsum slurry was confirmed to be similar to Experimental Examples 1-1 and 1-7. In other words, for the gypsum board, it was confirmed that there was no significant change in the viscosity of the gypsum slurry even when the amount of the water reducing agent was increased above 2.0 parts by mass. Therefore, it was confirmed that the cost of a building board can be controlled while increasing the productivity of the building boards by reducing the amount of water reducing agent to 2.0 parts by mass or less.

However, in Experimental Example 1-15, the amount of the water reducing agent was reduced to 0.02 parts by mass, and the viscosity of the gypsum slurry became high. As a result, it was difficult to form into the form of a gypsum board.

The viscosities of gypsum slurry in Experimental Examples 1-17 and 1-18 were high. As a result, they were difficult to form into gypsum board shapes.

The gypsum board manufactured in Experimental Example 2-9 had a high content of boron and thus was presumed to have a high neutron radiation shielding rate. However, the compression strength of the gypsum board obtained was reduced due to a decrease in the proportion of gypsum and so it was confirmed that the gypsum board was unsuitable for practical use. The neutron beam shielding rate was not evaluated because the compression strength of the gypsum board was low and it was not suitable for practical use.

In Experimental Example 2-10, the additive amount of water was reduced so that the specific gravity was to be 1.7. As a result, the viscosity of the gypsum slurry became higher than 150 dPa·s, and it was difficult to knead the gypsum slurry. Therefore, the gypsum board could not be manufactured.

The neutron beam shielding gypsum-based building board and the method of manufacturing the neutron beam shielding gypsum-based building board have been described in the embodiments and the like. However, the present invention is not limited to the above-described embodiments and the like. Various modifications and variations are possible within the scope of the invention as defined in the claims.

The present application is based on and claims priority of Patent Application No. 2020-094834, filed May 29, 2020 with the Japan Patent Office, and the entire contents of Japanese Patent Application No. 2020-094834 are hereby incorporated by reference.

### DESCRIPTION OF THE REFERENCE NUMERALS

- 10: Neutron beam shielding gypsum-based building board
- 101: First surface
- 102: Second surface
- 11: Surface material

## Claims

1. A neutron beam shielding gypsum-based building board comprising:
gypsum;
a boron-containing material containing boron an amount of which is in a range from 1.0 parts by mass to 120 parts by mass with respect to 100 parts by mass of the gypsum; and
a water reducing agent in a range from 0.05 parts by mass to 2.0 parts by mass with respect to 100 parts by mass of the gypsum,
wherein the boron-containing material includes one or more kinds selected from calcium borate, boron carbide, boric acid, boron oxide, sodium borate, and calcium boride, and
wherein a specific gravity in a dry condition is in a range from 0.65 to 1.6.

2. The neutron beam shielding gypsum-based building board according to claim 1,
wherein the boron-containing material is colemanite, and
wherein the water reducing agent is one or more kinds selected from a naphthalene-based water reducing agent and a melamine-based water reducing agent.

3. The neutron beam shielding gypsum-based building board according to claim 1,
wherein the boron-containing material is boron carbide, and
wherein the water reducing agent is one or more kinds selected from a naphthalene-based water reducing agent, a polycarboxylic acid-based water reducing agent, a lignin-based water reducing agent, and a melamine-based water reducing agent.

4. The neutron beam shielding gypsum-based building board according to any one of claims 1 to 3,
wherein a surface material is disposed on a first surface side and on a second surface side that is opposite to the first surface, and the surface material is one kind selected from a base sheet for a board, a glass fiber non-woven fabric, and a glass mat.

5. The neutron beam shielding gypsum-based building board according to any one of claims 1 to 4,
wherein the neutron beam shielding gypsum-based building board has a second grade exothermic property or higher.

6. A method of manufacturing a neutron beam shielding gypsum-based building board comprising:
a kneading step of kneading a raw material containing at least gypsum, a boron-containing material, a water reducing agent, and water to form a gypsum slurry;
a molding step of molding the gypsum slurry; and
a step of curing the molded gypsum slurry obtained in the above-described molding step;
wherein, in the raw material, the amount of boron contained in the boron-containing material is in a range from 1.0 parts by mass to 120 parts by mass with respect to 100 parts by mass of dihydrate gypsum,
wherein, the raw material contains the water reducing agent in a range from 0.05 parts by mass to 2.0 parts by mass with respect to 100 parts by mass of dihydrate gypsum,
wherein the boron-containing material contains one or more kinds selected from calcium borate, boron carbide, boric acid, boron oxide, sodium borate, and calcium boride, and
wherein a specific gravity in a dry condition of the neutron beam shielding gypsum-based building board obtained after the curing step is in a range from 0.65 to 1.6.

7. The method of manufacturing a neutron beam shielding gypsum-based building board according to claim 6,
wherein the boron-containing material is colemanite, and
wherein the water reducing agent is one or more kinds selected from a naphthalene-based water reducing agent and a melamine-based water reducing agent.

8. The method of manufacturing a neutron beam shielding gypsum-based building board according to claim 6,
wherein the boron-containing material is boron carbide, and
wherein the water reducing agent is one or more kinds selected from a naphthalene-based water reducing agent, a polycarboxylic acid-based water reducing agent, a lignin-based water reducing agent, and a melamine-based water reducing agent.

9. The method of manufacturing a neutron beam shielding gypsum-based building board according to any one of claims 6 to 8,
wherein the gypsum slurry is disposed between the surface materials in the molding step, and
wherein the surface material is one kind selected from a base sheet for a board, a fiberglass non-woven fabric, and a glass mat.

10. The method of manufacturing a neutron beam shielding gypsum-based building board according to any one of claims 6 to 9,
wherein the neutron beam shielding gypsum-based building board obtained after the curing step has a second grade exothermic property or higher.
